# EUROPÄISCHE PATENTANMELDUNG

(11) **EP 4 311 413 A1**
(43) Veröffentlichungstag der Anmeldung: **31.01.2024**
(21) Anmeldenummer: 23401024.7
(22) Anmeldetag: 18.07.2023
(51) Int. Cl.: A01C 7/20, A01C 5/06

(54) **LANDWIRTSCHAFTLICHE MASCHINE**

(30) Priorität: 26.07.2022 DE 102022118611
(71) Anmelder: Amazonen-Werke H. Dreyer SE & Co. KG, 49205 Hasbergen (DE)
(72) Erfinder: Hempen, Henning, 26676 / Harkebrügge (DE); Stier, Roy, 26121 Oldenburg (DE); Hahnkemeyer, Nils, 29582 Hanstedt (DE)

(57) **Zusammenfassung**

Die Erfindung betrifft eine landwirtschaftliche Maschine (1), insbesondere Sämaschine, mit einem mehrere an jeweils einem Scharträger (3) angeordnete Säschare (2) aufweisenden Scharrahmen (10), der über eine Schartiefeneinstellung (5) zur Einstellung unterschiedlicher Arbeitstiefen (T) der Säschare (2) um eine Tiefenachse (A₁) gegenüber einem Rahmenträger (4) verschwenkbar ist, wobei die Scharträger (3) über eine Schardruckeinstellung (6) zur Einstellung unterschiedlicher auf die Säschare (2) wirkender Schardrücke (D) um eine Druckachse (A₂) verschwenkbar sind, wobei die Druckachse (A₂) über die Schartiefeneinstellung (5) auf einer Umlaufbahn (U₁) um die Tiefenachse (A₁) verschwenkbar ist.

## Beschreibung

Die Erfindung betrifft eine landwirtschaftliche Maschine, insbesondere Sämaschine, mit einem mehrere an jeweils einem Scharträger angeordnete Säschare aufweisenden Scharrahmen, der über eine Schartiefeneinstellung zur Einstellung unterschiedlicher Arbeitstiefen der Säschare um eine Tiefenachse gegenüber einem Rahmenträger verschwenkbar ist, wobei die Scharträger über eine Schardruckeinstellung zur Einstellung unterschiedlicher auf die Säschare wirkender Schardrücke um eine Druckachse verschwenkbar sind.

Solche landwirtschaftlichen Maschinen werden, beispielsweise zur Aussaat von Saatgut oder auch zum Ausbringen von Dünger, mit einer gewissen Fahrgeschwindigkeit entlang im Wesentlichen parallel zueinander verlaufenden Bahnen über eine landwirtschaftliche Nutzfläche, wie beispielsweise einem Feld oder Acker, gefahren, wozu die Maschinen üblicherweise an landwirtschaftlichen Zugmaschinen angehängt oder angebaut sind oder alternativ selbstfahrend ausgebildet sein können.

An deren hinteren Ende weisen solche landwirtschaftlichen Maschinen in der Regel mehrere, beispielsweise schneidmesser-, meißel- oder schneidscheibenartige Säschare zur Erzeugung von parallelen, rillen- oder rinnenartigen Säfurchen in dem Boden der landwirtschaftlichen Nutzfläche auf, in welche das Saatgut abgelegt werden kann. Die einzelnen Säschare sind dabei in der Regel an sich im Wesentlichen in Fahrtrichtung erstreckenden, parallel zueinander angeordneten Scharträgern befestigt, wobei die Scharträger oftmals nach Art von einseitig gelagerten Tragarmen ausgebildet sind. In der Regel sind mehrere Säschare über jeweils einen Scharträger an einem gemeinsamen Scharrahmen angeordnet, welcher über einen Rahmenträger mit der Maschine verbunden ist. Die Maschine kann je nach Anwendung einen oder mehrere Scharrahmen aufweisen, welche etwa für die Straßenfahrt in raumsparender Weise klapp- oder schwenkbar ausgebildet sein können.

Um die Arbeitstiefe der Säschare und damit die Tiefe der von den Säscharen erzeugten Säfurchen, welche die Ablagetiefe des Saatguts im Boden bestimmen, einstellen zu können, beispielsweise zur Anpassung an unterschiedliche Bodenbeschaffenheiten oder verschiedene Saatgutsorten, weisen solche Maschinen in der Regel eine Schartiefeneinstellung auf. Oftmals ist hierbei der Scharrahmen über die Schartiefeneinstellung um eine Tiefenachse relativ zu einem an der Maschine befestigten Rahmenträger verschwenkbar, wodurch sich unterschiedliche Arbeitstiefen der Säschare einstellen lassen.

Zur möglichst gleichmäßigen und zuverlässigen Einhaltung der über die Schartiefeneinstellung eingestellten Arbeitstiefe oder zur Ermöglichung eines ruhigen Laufs der Säschare auch bei unebenen Nutzflächen und hohen Fahrgeschwindigkeiten weisen solche Maschinen neben der Schartiefeneinstellung oftmals auch eine Schardruckeinstellung auf. Hierzu werden die Säschare nach Art einer Vorspannung mit einem Schardruck beaufschlagt. In der Praxis wird dies konstruktiv dadurch erreicht, dass die Scharträger um eine Drehachse schwenkbar sind, über welche der Schardruck auf die Säschare aufgebracht werden kann.

Es hat sich in der Praxis zur Vermeidung von zeitintensiven Rüstvorgängen und zur Anpassung auf sich ggf. während der Aussaat ändernder Bodenverhältnisse als vorteilhaft herausgestellt, wenn die Schartiefen- und die Schardruckeinstellung fernsteuerbar sind. Aus dem Stand der Technik sind daher Maschinen auch bekannt, bei welchen die Schartiefen- und die Schardruckeinstellung über fernsteuerbare hydraulische Aktoren umgesetzt sind. Hierzu wird beispielsweise in der WO 2021/089197 A1 ein Hydraulikzylinder vorgeschlagen, über welchen der Scharrahmen zur Einstellung unterschiedlicher Schartiefen und Schardrücke relativ zu dem Rahmenträger um eine einzige Achse verschwenkbar ist, welche sowohl als Tiefenachse als auch als Druckachse fungiert. In ähnlicher Weise werden in der WO 2021/080496 A1 zwei separate Hydraulikzylinder für die Schartiefen- und Schardruckeinstellung vorgeschlagen, über welche der Scharrahmen zur Einstellung unterschiedlicher Schartiefen sowie Schardrücke im Wesentlichen um ein und dieselbe Achse verschwenkbar ist.

Solche Maschinen haben sich zwar grundsätzlich bewährt, allerdings hat es sich in der Praxis als nachteilig erwiesen, dass sich die Schartiefen- und die Schadruckeinstellung bei solchen Maschinen gegenseitig beeinflussen und die Arbeitstiefe und der Schardruck in der Regel nicht unabhängig voneinander einstellbar sind. Zudem ergibt sich bei den bekannten Maschinen ein erhöhter Regelungsaufwand, da beispielsweise bei einer Veränderung der Arbeitstiefe der Schardruck oftmals nachgeregelt werden muss.

Vor diesem Hintergrund stellt sich die Erfindung die **Aufgabe,** eine landwirtschaftliche Maschine anzugeben, bei welcher die Arbeitstiefe und der Schardruck der Säschare weitgehend unabhängig voneinander einstellbar und auf vergleichsweise einfache Art und Weise regelbar sind.

Diese Aufgabe wird bei einer landwirtschaftlichen Maschine der eingangs genannten Art durch die Merkmale des Patentanspruchs 1 **gelöst.** Vorteilhafte Weiterbildungen sind in den unabhängigen Unteransprüchen angegeben.

Die Druckachse ist über die Schartiefeneinstellung auf einer Umlaufbahn um die Tiefenachse verschwenkbar. Eine derartige Ausgestaltung erlaubt eine separate Ansteuerung der Tiefenachse zur Einstellung der Arbeitstiefe über die Schartiefeneinstellung sowie der Druckachse zur Einstellung des Schardrucks über die Schardruckeinstellung. Gegenseitige Beeinträchtigungen können hierdurch auf ein Minimum reduziert werden. Ferner erweist sich eine solche Ausgestaltung als kinematisch vorteilhaft, da eine aufwendige Nachregelung des Schardrucks bei einer Veränderung der Arbeitstiefe entfallen kann.

In diesem Zusammenhang hat es sich als konstruktiv vorteilhaft erwiesen, wenn sich die Tiefenachse und die Druckachse parallel zueinander, insbesondere quer zu einer Fahrtrichtung der landwirtschaftlichen Maschine erstrecken. Eine derartige Anordnung erlaubt kinematisch einfache Bewegungen zur zuverlässigen und fehlerarmen Schartiefen- und Schardruckeinstellung. In diesem Zusammenhang kann es besonders vorteilhaft sein, wenn die Druckachse in Fahrtrichtung der Maschine hinter der Tiefenachse angeordnet ist. In vertikaler Richtung kann die Druckachse, je nach Ausgestaltung der Maschine und je nach eingestellter Schartiefe, entweder oberhalb oder unterhalb der Tiefenachse verlaufen.

Es ist ferner bevorzugt, wenn die Maschine eine stufenlose Schartiefeneinstellung und/oder eine stufenlosen Schardruckeinstellung aufweist. Hierdurch kann eine besonders bedienerfreundliche und flexibel an verschiedene Umgebungsbedingungen, wie etwa unterschiedliche Bodenverhältnisse oder wechselndes Saatgut anpassbare Schartiefen- und/oder Schardruckeinstellung ermöglicht werden. In diesem Zusammenhang ist es besonders bevorzugt, wenn die Schartiefe und/oder der Schardruck von dem Bedienpersonal als Prozentwert der Schartiefe bzw. des Schardrucks in einem Bedienterminal der Maschine eingegeben werden können. Das Bedienterminal kann bevorzugt an der landwirtschaftlichen Zugmaschine angeordnet sein. Es kann ferner im Hinblick auf eine schnelle und wiederholgenaue Schartiefen- bzw. Schardruckeinstellung vorteilhaft sein, wenn in dem Bedienterminal vordefinierte Bedienstufen eingestellt werden können.

Es wird weiter vorgeschlagen, dass der Scharrahmen über die Schartiefeneinstellung zwischen einer Transportstellung, in welcher die Säschare angehoben sind und mehreren, sich durch unterschiedliche Arbeitstiefen auszeichnende Arbeitsstellungen verschwenkbar ist. Eine derartige Anordnung hat sich als besonders bedienerfreundliche Einstellmöglichkeit einer Transportstellung bzw. unterschiedlicher Arbeitsstellungen über die Schartiefeneinstellung erwiesen. In den Arbeitsstellungen können die Säschare bevorzugt mit dem Boden der Nutzfläche in Kontakt sein bzw. in diesen zur Erzeugung von Säfurchen eindringen. In der Transportstellung sind die Säschare zur Ermöglichung einer Änderung der Fahrtrichtung im Vorgewende bzw. für eine sichere Straßenfahrt oberhalb der Nutzfläche angehoben. Es kann in diesem Zusammenhang vorteilhaft sein, wenn eine erste Transportstellung zum Rangieren auf der Nutzfläche, etwa im Vorgewende, mit nur in eine geringe Höhe ausgehobenen Säscharen vorgesehen ist. Eine zweite Transportstellung kann sich zur Ermöglichung einer vorteilhaften Straßenlage bei der Straßenfahrt durch höher ausgehobene Säschare auszeichnen.

In diesem Zusammenhang hat es sich als konstruktiv vorteilhaft herausgestellt, wenn die Druckachse in der Transportstellung oberhalb der Tiefenachse angeordnet ist. Eine derartige Ausgestaltung ermöglicht eine vorteilhaft verbesserte Kompaktheit der Maschine in der oder den Transportstellungen mit einer geringen Auskraglänge der Scharträger entgegen der Fahrtrichtung. Ferner kann es bevorzugt sein, wenn neben der oder den Transportstellungen und den Arbeitsstellungen eine Klappstellung eingestellt werden kann, welche ein kollisionsfreies Klappen des Scharrahmens erlaubt.

Es wird in diesem Zusammenhang ferner vorgeschlagen, dass die Druckachse in den Arbeitsstellungen im Wesentlichen auf gleicher Höhe wie die Tiefenachse angeordnet ist. Eine derartige Ausgestaltung hat sich als vorteilhaft im Hinblick auf eine einfache und bedienerfreundliche Einstellung der Arbeitstiefe erwiesen, insbesondere bei nur geringen Änderungen der Arbeitstiefe.

Des Weiteren hat es sich als vorteilhaft herausgestellt, wenn die Tiefenachse und die Druckachse derart angeordnet sind, dass der eingestellte Schardruck bei einer Änderung der Arbeitstiefe im Wesentlichen konstant ist. Hierdurch kann auf bedienerfreundliche und zeitsparende Art und Weise eine Nachregelung des Schardrucks bei Verstellung der Arbeitstiefe im Wesentlichen vermieden werden. Besonders bevorzugt ist es in diesem Zusammenhang, wenn sich die Lage der Druckachse bei einer Änderung des Schardrucks über die Schardruckeinstellung nicht ändert.

In einer Weiterbildung der Erfindung wird vorgeschlagen, dass die Schartiefeneinstellung mindestens ein Stellelement aufweist, über welches der Scharrahmen zur Einstellung der Arbeitstiefe um die Tiefenachse verschwenkbar ist. Ein solches Stellelement ermöglicht eine bedienerfreundliche, schnelle und zuverlässige Schartiefeneinstellung. In diesem Zusammenhang ist es besonders vorteilhaft, wenn das Stellelement längenveränderlich ausgebildet ist.

Im Zusammenhang mit dem Stellelement der Schartiefeneinstellung wird ferner vorgeschlagen, dass sich dieses zwischen einer scharrahmenseitigen Lagerstelle und einer rahmenträgerseitigen Lagerstelle erstreckt. Durch eine solche Anordnung ist eine mechanisch belastbare Verbindung zwischen Scharrahmen und Rahmenträger mit einer einfachen Lagerung ausbildbar. Aus konstruktiver Sicht besonders bevorzugt ist es hierbei, wenn insbesondere die scharrahmenseitige Lagerstelle gabelförmig ausgebildet ist.

Eine konstruktiv und kinematisch vorteilhafte Ausgestaltung sieht in diesem Zusammenhang vor, dass das Stellelement der Schartiefeneinstellung über die Schartiefeneinstellung um die rahmenträgerseitige Lagerstelle verschwenkbar ist.

Eine weitere vorteilhafte Ausgestaltung sieht vor, dass das Stellelement der Schartiefeneinstellung als Hydraulikzylinder, insbesondere als Gleichlaufzylinder, ausgebildet ist. Eine solche Ausgestaltung ermöglicht auf bedienerfreundliche Art und Weise eine Fernsteuerung der Schartiefeneinstellung, beispielsweise von der landwirtschaftlichen Zugmaschine aus. Ein Gleichlaufzylinder ist besonders vorteilhaft im Hinblick auf die Aufbringung von sowohl Zug- als auch Druckkräften zur Einstellung unterschiedlicher Arbeitstiefen über die Schartiefeneinstellung. Es wird in diesem Zusammenhang ferner vorgeschlagen, dass der Hydraulikzylinder beidseitig Anschlusszapfen für die Versorgung mit Hydraulikflüssigkeit aufweist. Es kann in diesem Zusammenhang jedoch auch bevorzugt sein, dass das Stellelement der Schartiefeneinstellung als mechanisches Stellelement, Pneumatikzylinder, Linearmotor oder ein anderweitig angetriebenes, etwa motorisches Stellelement ausgebildet ist.

Es ist ferner vorteilhaft, wenn die Schartiefeneinstellung mindestens zwei mechanisch parallel angeordnete Stellelemente aufweist. Über eine solche Anordnung ist eine verbesserte, gleichmäßige Schartiefeneinstellung über die gesamte Breite des Scharrahmens möglich. Die Stellelemente können als Lenker ausgebildet sein.

In Bezug auf die Schardruckeinstellung wird vorgeschlagen, dass diese mindestens ein Stellelement aufweist, über welches die Scharträger zur Einstellung des Schardrucks um die Druckachse verschwenkbar sind. Hierdurch wird auf einfache, bedienerfreundliche Art und Weise eine zuverlässige Schardruckeinstellung ermöglicht. Besonders bevorzugt ist es in diesem Zusammenhang, wenn das Stellelement der Schardruckeinstellung im Wesentlichen synchron mit dem Stellelement der Schartiefeneinstellung verschwenkbar ist.

Es hat sich als vorteilhaft erwiesen, wenn sich das Stellelement der Schardruckeinstellung zwischen einer scharrahmenseitigen Lagerstelle und einer rahmenträgerseitigen Lagerstelle erstreckt. Dies ermöglicht eine belastbare mechanische Verbindung zwischen dem Scharrahmen und dem Rahmenträger.

In einer vorteilhaften Ausgestaltung weist die landwirtschaftliche Maschine ein sich entlang der Druckachse erstreckendes und über die Schardruckeinstellung um die Druckachse drehbares Schardruckrohr auf. Ein solches Schardruckrohr ermöglicht auf einfache und bedienerfreundliche Art und Weise eine gleichmäßige Schardruckeinstellung. Besonders vorteilhaft ist es in diesem Zusammenhang, wenn die die Säschare aufweisenden Scharträger sich im Wesentlichen parallel zueinander erstreckend an dem Schardruckrohr gelagert sind. Somit kann über die Schardruckeinstellung eine gleichmäßige Änderung des Schardrucks für mehrere Säschare zugleich erfolgen. Die Druckachse kann sich in vorteilhafter Weise im Wesentlichen koaxial zu dem Schardruckrohr erstrecken. Aus konstruktiver Sicht besonders vorteilhaft ist es, wenn das Schardruckrohr als geschlossenes Profil, insbesondere als Vierkantprofil, ausgebildet ist. Alternativ kann das Schardruckrohr auch als Vollprofil ausgebildet sein.

In diesem Zusammenhang wird vorgeschlagen, dass die Scharträger über Federelemente an dem Schardruckrohr gelagert sind. Eine solche Lagerung erlaubt einen zuverlässigen Ausgleich von Bodenunebenheiten oder Maschinenschwingungen, was sich im Hinblick auf eine verschleißarme Ausgestaltung der Maschine als vorteilhaft erwiesen hat. Ferner kann eine solche Lagerung eine besonders zuverlässige Aufbringung des Schardrucks über die Federvorspannung ermöglichen. Insbesondere können die Federelemente als in Umfangsrichtung des Schardruckrohes wirkende Drehfedern ausgebildet sein. In diesem Zusammenhang hat es sich als konstruktiv herausgestellt, wenn die Federelemente nach Art von sich entlang des Schardruckrohrs erstreckenden Strangelementen, beispielsweise aus Gummi oder Kunststoff, ausgeführt sind.

In einer vorteilhaften Ausgestaltung der Schardruckeinstellung wird vorgeschlagen, dass das Stellelement der Schardruckeinstellung über die Schartiefeneinstellung um die rahmenträgerseitige Lagerstelle verschwenkbar ist. Hierdurch wird ermöglicht, dass das Stellelement der Schardruckeinstellung im Wesentlichen synchron zu dem Stellelement der Schartiefeneinstellung verschwenkbar ist. Im Hinblick auf eine besonders einfache, insbesondere von dem Bedienpersonal aus der landwirtschaftlichen Zugmaschine heraus betätigbaren Fernbedienung hat es sich als vorteilhaft herausgestellt, wenn das Stellelement der Schardruckeinstellung als Hydraulikzylinder ausgebildet ist. Insbesondere kann das Stellelement als einfach wirkender Hydraulikzylinder ausgebildet sein. Es kann sich in diesem Zusammenhang jedoch je nach Anwendung auch als vorteilhaft erweisen, wenn das Stellelement der Schardruckeinstellung als mechanisches Stellelement, Pneumatikzylinder, Linearmotor oder ein anderweitig angetriebenes, etwa motorisches Stellelement ausgebildet ist.

Im Hinblick auf eine gleichmäßige Schardruckeinstellung über die Breite der Maschine und insbesondere des Scharrahmens hat es sich als vorteilhaft erwiesen, wenn mindestens zwei parallel angeordnete Stellelemente der Schardruckeinstellung vorgesehen sind. Die Stellelemente können, neben einer mechanischen Parallelanordnung, insbesondere auch hydraulisch parallel zueinander angeordnet sein.

Es ist ferner von Vorteil, wenn die jeweils mindestens zwei Stellelemente der Schartiefen- und/oder der Schardruckeinstellung spiegelsymmetrisch zu einer Längsachse der landwirtschaftlichen Maschine angeordnet sind. Ein solcher spiegelsymmetrischer Aufbau ermöglicht eine vorteilhaft günstige, gleichmäßige Kraftübertragung auf die Säschare. Je nach Anwendung kann sich jedoch auch eine andere, beispielsweise asymmetrische Anordnung der Stellelemente in Bezug auf die Längsachse der Maschine als vorteilhaft erweisen.

In einer vorteilhaften Weiterbildung der Erfindung wird vorgeschlagen, dass der Scharrahmen eine quer zur Fahrtrichtung verlaufende Knickachse aufweist, um welche die Scharträger gegenüber einem am Rahmenträger angeordneten Scharrahmenelement knickbar sind. Eine derartige Ausgestaltung ermöglicht eine kinematisch einfache und zuverlässige Einstellung unterschiedlicher Arbeitstiefen. Zur Einstellung der Arbeitstiefen sind die Scharträger gegenüber dem Scharrahmenelement um die Knickachse knickbar.

Als konstruktiv vorteilhaft hat es sich in diesem Zusammenhang erwiesen, wenn die Knickachse entlang der Druckachse verläuft.

In einer weiteren vorteilhaften Ausgestaltung ist eine Arbeitstiefenerfassung zur Erfassung der Arbeitstiefe vorgesehen. Eine solche Arbeitstiefenerfassung ermöglicht eine präzise Einstellung der Arbeitstiefe, wodurch eine zuverlässige, gleichmäßige Saatgutablage durch die Säschare ermöglicht werden kann.

In diesem Zusammenhang ist es bevorzugt, wenn die Arbeitstiefenerfassung einen Drehwinkelsensor zur Messung eines zwischen dem Scharträger und einer Nutzfläche eingestellten Drehwinkels aufweist, wobei der Drehwinkel mit einer Arbeitstiefe korrespondiert. Ein solcher Drehwinkelsensor ermöglicht eine besonders robuste und zuverlässige Arbeitstiefenerfassung. Insbesondere kann der Drehwinkelsensor zur Messung eines zwischen der Druckachse bzw. dem Schardruckrohr, an welchem die Scharträger gelagert sind, und der Nutzfläche oder der Horizontalen ausgebildet sein.

Es kann in diesem Zusammenhang besonders vorteilhaft sein, wenn in einem vorgegebenen Hauptarbeitsbereich der Drehwinkel und die Arbeitstiefe annähernd proportional sind. Hierdurch kann eine bedienerfreundliche und zuverlässige Arbeitstiefeneinstellung in dem Hauptarbeitsbereich ermöglicht werden. Bevorzugt ist es in diesem Zusammenhang, wenn der Hauptarbeitsbereich sich in einem Bereich von ca. 40 mm oberhalb und 200 mm unterhalb der Oberfläche der Nutzfläche erstreckt. Besonders bevorzugt ist es, wenn der Hauptarbeitsbereich sich über einen Bereich von ca. 20 mm oberhalb und 100 mm unterhalb der Oberfläche der Nutzfläche erstreckt.

Es wird in diesem Zusammenhang ferner vorgeschlagen, dass in dem Hauptarbeitsbereich eine Änderung der Arbeitstiefe durch eine proportionale Änderung des Drehwinkels über die Schartiefeneinstellung erreichbar ist. Dies ermöglicht eine besonders bedienerfreundliche Einstellung der Arbeitstiefe über die Änderung des Drehwinkels. Insbesondere kann eine Änderung des Drehwinkels um einen gewissen Prozentsatz eine Änderung der Arbeitstiefe der Säschar um zumindest annähernd denselben Prozentsatz ermöglichen.

In Bezug auf die Arbeitstiefenerfassung hat es sich als vorteilhaft erwiesen, wenn der Drehwinkelsensor zur Erfassung des Drehwinkels zwischen dem Rahmenträger und dem Scharrahmenelement angeordnet ist. Diese Anordnung erlaubt eine besonders einfache und fehlerunanfällige Erfassung der Arbeitstiefe.

Im Hinblick auf einen sicheren, robusten und erschütterungsarmen Transport der Maschine wird ein die Scharträger zur Stabilisierung in der Transportstellung lagernder Transportanschlag vorgeschlagen. Über diesen Transportanschlag kann eine zuverlässige Lagerung der Scharträger, insbesondere in der oder den Transportstellungen, ermöglicht werden.

In diesem Zusammenhang kann es ferner vorteilhaft sein, wenn die Scharträger über die Schardruckeinstellung zur Stabilisierung in der Transportstellung gegen den Transportanschlag vorspannbar sind. Hierdurch kann eine weiter erhöhte Transportsicherheit erreicht werden. Der Scharträger kann somit in der oder den Transportstellungen stets vorgespannt an dem Schardruckrohr gelagert sein.

In diesem Zusammenhang wird weiter vorgeschlagen, dass der Transportanschlag über die Schartiefeneinstellung auf einer Umlaufbahn um die Tiefenachse verschwenkbar und in den Arbeitsstellungen außer Kontakt mit den Scharträgern ist. Hierdurch wird zum einen eine einfache Bewegung des Transportanschlags auf der Umlaufbahn ermöglicht. Zum anderen kann eine möglichst große Bewegungsfreiheit der Säschare in den Arbeitsstellungen sichergestellt werden, welche nicht durch den Transportanschlag beschränkt wird.

Ferner wird eine Schartiefenregelung zur schardruckunabhängigen Regelung der Arbeitstiefe vorgeschlagen. Eine solche Schartiefenregelung ermöglicht eine zuverlässige, fehlerarme Aussaat bzw. Saatausbringung, so dass aus unterschiedlichen Arbeitstiefen resultierende Säfehler vermieden werden können. Besonders vorteilhaft ist es in diesem Zusammenhang, wenn die Messwerte des Drehwinkelsensors bei der Schartiefenregelung als Eingangsgröße berücksichtigt wird. Ferner erweist sich die Schartiefenregelung insbesondere während der Aussaat auf einem unebenen, etwa kupierten Gelände usw. als vorteilhaft. Ferner kann die Schartiefenregelung eine Ausgleichsmöglichkeit zur Kompensation von Undichtigkeiten oder sonstigen Störungen im Hydraulikkreislauf aufweisen. Darüber hinaus wird vorgeschlagen, dass in der oder den Transportstellungen eine Spülfunktion, insbesondere am Hydraulikzylinder, nutzbar ist, über welche während der Aussaat auftretende Abweichungen der Schartiefe in der oder den Transportstellungen ausgeglichen werden können.

Des Weiteren wird eine Schardruckregelung zur arbeitstiefenunabhängigen Regelung des Schardrucks vorgeschlagen. Eine derartige Schardruckregelung ermöglicht die Vermeidung von Säfehlern infolge einer fehlerhaften Schardruckeinstellung. Außerdem können über die Schardruckregelung zuverlässig korrekte Schardrücke eingestellt werden, so dass hohe Fahrgeschwindigkeiten und damit einhergehende hohe Flächenleistungen ermöglicht werden können. Die Schardruckregelung weist insbesondere einen Regelkreis mit einem Abgleich zwischen Soll- und Istwerten des Schardrucks auf.

In diesem Zusammenhang ist es besonders bevorzugt, wenn der Schardruck in der Schardruckregelung auf Basis des hydraulischen Drucks geregelt wird. Hierdurch wird eine sowohl einfache als auch zuverlässige Regelung ermöglicht. Insbesondere können somit aufwendige Weg-/Messsysteme entfallen.

In einer besonders vorteilhaften Ausgestaltung weist eine Maschine der eingangs genannten Art mehrere Scharrahmen auf, die jeweils eine Vielzahl nebeneinander angeordnete Säschare und eine Schartiefeneinstellung zur Einstellung unterschiedlicher Arbeitstiefen aufweisen, die mindestens zwei hydraulische Stellelemente aufweist, wobei die gemeinsam an einem Scharrahmen angeordneten Stellelemente hydraulisch zueinander parallel geschaltet sind und die an benachbarten Scharrahmen angeordneten Stellelemente über eine scharrahmenübergreifende hydraulische Reihenschaltung miteinander verbunden sind. Eine derartige Ausgestaltung ermöglicht auf einfache Art und Weise eine scharrahmenübergreifende Einstellung gleichmäßiger Arbeitstiefen.

Es hat sich als vorteilhaft erwiesen, wenn die Säschare jeweils an einem Scharträger angeordnet sind. Eine solche Anordnung ermöglicht eine kinematisch einfache und zuverlässige Lagerung der Säschare. An einem Scharträger kann dabei ein einzelnes oder mehrere Säschare angeordnet sein.

In Bezug auf die Stellelemente wird vorgeschlagen, dass diese als Gleichlaufzylinder ausgebildet sind. Derartige Gleichlaufzylinder erlauben in vorteilhafter Weise die Übertragung von sowohl Zug- als auch Druckkräften. Alternativ können die Stellelemente auch als herkömmliche, insbesondere nur in eine Richtung wirkende Hydraulikzylinder ausgebildet sein.

Es hat sich als vorteilhaft erwiesen, wenn die einem ersten Scharrahmen zugeordneten Stellelemente über jeweils einen Hydraulikeinlass von einer zentralen Hydraulikversorgung mit Hydraulikflüssigkeit versorgbar sind. In diesem Zusammenhang ist es besonders vorteilhaft, wenn die Hydraulikeinlässe jeweils mit Rückschlagventilen versehen sind. Die Hydraulikflüssigkeit kann beispielsweise von einer zentralen Hydraulikpumpe oder dem Gebläse der pneumatischen Saatgutförderung stammen. In einer weiteren vorteilhaften Ausgestaltung ist ein Hydrauliksteuergerät vorgesehen, welches die Umschaltung der Hydraulikversorgung zwischen der Pumpe und dem Gebläse ermöglicht.

Es wird ferner vorgeschlagen, dass die Reihenschaltung derart ausgebildet ist, dass die Stellelemente benachbarter Scharrahmen nach Art einer Geber-/Nehmeranordnung miteinander verbunden sind. Eine derartige Geber-/Nehmeranordnung ermöglicht scharrahmenübergreifend eine besonders gleichmäßige, synchrone Tiefeneinstellung.

In einer vorteilhaften Weiterbildung wird vorgeschlagen, dass die Hydraulikauslässe der Stellelemente eines Scharrahmens mit den Hydraulikeinlässen der Stellelemente eines benachbarten Scharrahmens verbunden sind. Hierdurch ergibt sich eine besonders vorteilhafte Geber-/Nehmerschaltung der Stellelemente. Besonders vorteilhaft ist es, wenn die Hydraulikauslässe der benachbarten Scharrahmen mit einem zentralen Hydraulikrücklauf verbunden sind.

Eine weitere vorteilhafte Ausgestaltung sieht einen mittleren und zwei äußere Scharrahmen vor, welche jeweils ein rechtes und ein linkes Stellelement aufweisen. Eine derartige Scharrahmenanordnung hat sich als vorteilhaft im Hinblick auf eine möglichst große Arbeitsbreite der Maschine erwiesen, welche bevorzugt zur Erzielung einer hohen Flächenleistung eingesetzt werden kann.

In diesem Zusammenhang wird weiter vorgeschlagen, dass die äußeren Scharrahmen klappbar ausgebildet sind. Durch die klappbare Ausgestaltung ist eine platzsparende Anordnung der Scharrahmen insbesondere quer zur, aber auch in Fahrtrichtung, beispielsweise für eine sichere Straßenfahrt, möglich. In einer hydraulisch vorteilhaften Ausgestaltung wird vorgeschlagen, dass jeweils die linken Stellelemente der Scharrahmen und die rechten Stellelemente der Scharrahmen hydraulisch miteinander verbunden sind. Hierdurch ergibt sich eine hydraulische Reihenschaltung nach dem Geber-/Nehmerprinzip über die drei Scharrahmen hinweg.

Ferner wird vorgeschlagen, dass das linke und das rechte Stellelement des Scharrahmens zur gleichmäßigen Einstellung der Arbeitstiefe mechanisch miteinander gekoppelt sind. Über eine solche mechanische Kopplung können beispielsweise Bodenunebenheiten ausgeglichen werden. Die mechanische Kopplung kann etwa über sich quer zur Fahrtrichtung erstreckende Querträger erreicht werden. Besonders vorteilhaft ist es, wenn das linke und das rechte Stellelement über deren Kolbenstangen mechanisch miteinander gekoppelt sind.

Des Weiteren hat es sich als vorteilhaft erwiesen, wenn die Schartiefeneinstellung mindestens ein Proportionalventil aufweist. Ein solches Proportionalventil kann eine besonders exakte, insbesondere auch stufenlose Arbeitstiefeneinstellung ermöglichen. Alternativ können auch herkömmliche Vier/Drei-Wege-Ventile oder mehrere Zwei/Zwei-Wege-Ventile verwendet werden.

Darüber hinaus wird vorgeschlagen, dass die Scharrahmen über die Schartiefeneinstellung zur Einstellung unterschiedlicher Arbeitstiefen der Säschare um eine Tiefenachse gegenüber einem Rahmenträger verschwenkbar sind. Hierdurch kann eine kinematisch einfache und zuverlässige Schartiefeneinstellung ermöglicht werden.

Eine vorteilhafte Ausgestaltung sieht in diesem Zusammenhang vor, dass eine Schartiefenregelung zur Regelung der Arbeitstiefe vorgesehen ist. Über eine derartige Schartiefenregelung kann eine zuverlässige, fehlerarme Aussaat mit konstanter Ablagetiefe des Saatguts ermöglicht werden.

Es wird darüber hinaus vorgeschlagen, dass eine Schardruckeinstellung zur Einstellung unterschiedlicher auf die Säschare wirkender Schardrücke vorgesehen ist. Eine Schardruckeinstellung ermöglicht die Einstellung des auf die Säschare wirkenden Schardrücke, wodurch die Arbeitstiefe zuverlässig gehalten werden kann, beispielsweise auch bei unebenem Untergrund oder wechselnden Bodenbeschaffenheiten. Ferner erlaubt eine Schardruckeinstellung eine verbesserte Laufruhe der Säschare, insbesondere bei hohen Fahrgeschwindigkeiten.

Weitere Einzelheiten und Vorteile der Erfindung werden nachfolgend unter Zuhilfenahme der beigefügten Zeichnungen von Ausführungsbeispielen erläutert. Darin zeigen:
- Fig. 1: eine perspektivische Ansicht eines Scharrahmens einer landwirtschaftlichen Maschine;
- Fig. 2: eine ausschnittsweise Seitenansicht einer landwirtschaftlichen Maschine mit einem in einer Arbeitsstellung angeordneten Scharrahmen;
- Fig. 3-4: Seitenansichten eines Scharrahmens in einer angehobenen (Transport-) Stellung sowie in einer abgesenkten Arbeitsstellung;
- Fig. 5a-b: verschiedene ausschnittsweise, teilweise perspektivische Ansichten der Schardruckeinstellung;
- Fig. 6: eine Seitenansicht gemäß Fig. 2 mit einem in einer Transportstellung angeordneten Scharrahmen;
- Fig. 7a-b: eine Seitenansicht gemäß Fig. 2 mit einem in einer Arbeitsstellung angeordneten Scharrahmen mit unterschiedlichen eingestellten Schardrücken;
- Fig. 8a-b: eine Seitenansicht gemäß Fig. 2 mit einem in einer weiteren Arbeitsstellung angeordneten Scharrahmen mit unterschiedlichen eingestellten Schardrücken;
- Fig. 9: eine perspektivische, ausschnittsweise Draufsicht auf einen Scharrahmen, und
- Fig. 10: einen schematischen Schaltplan eines Hydrauliksystems für eine landwirtschaftliche Maschine mit drei Scharrahmen.

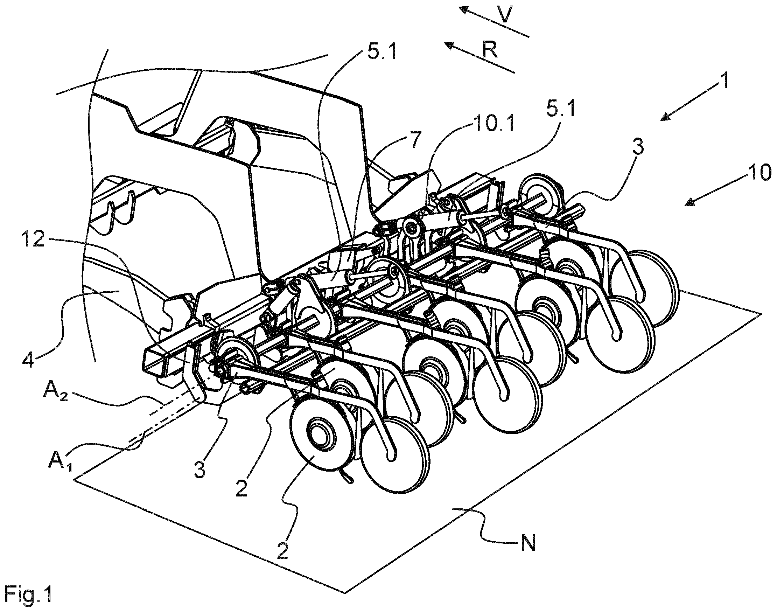

Die Darstellung in Fig. 1 zeigt eine perspektivische Draufsicht auf eine landwirtschaftliche Maschine 1 zum Ausbringen von Saatgut G auf einer landwirtschaftlichen Nutzfläche N, beispielsweise einem Acker oder Feld zum Anbau von Getreide. Bei der Maschine 1 handelt es sich um eine Sämaschine, mit welcher neben oder alternativ zu Saatgut G auch ein anderes körniges, pulverförmiges oder granulares Material ausgebracht werden kann, wie etwa ein Düngemittel o. Ä.

Zur Aussaat des Saatguts G ist die landwirtschaftliche Maschine 1 an einer landwirtschaftlichen Zugmaschine (nicht dargestellt), beispielsweise einem Traktor oder einem Schlepper, angehängt und wird von dieser mit einer gewissen Fahrgeschwindigkeit V entlang im Wesentlichen parallel zueinander verlaufenen Bahnen in Fahrtrichtung R über die landwirtschaftliche Nutzfläche N gezogen. Alternativ kann die landwirtschaftliche Maschine 1 auch an der landwirtschaftlichen Zugmaschine angebaut oder selbstfahrend ausgebildet sein.

Neben diversen anderen Werkzeugen, Geräten oder Apparaten zur Bodenbearbeitung, beispielsweise zur Vor -oder Nachbereitung der Nutzfläche N für die Aussaat des Saatguts G, weist die landwirtschaftliche Maschine 1 an deren hinteren Ende einen Scharrahmen 10 auf. Der Scharrahmen 10 weist eine Vielzahl nebeneinander angeordneter Säschare 2 auf, über welche das Saatgut G in parallelen Saatreihen abgelegt werden kann. Benachbarte Säschare 2 sind dabei zur Ermöglichung geringerer Saatreihenabstände in Fahrtrichtung R versetzt zueinander angeordnet. Die Säschare 2 weisen jeweils eine oder mehrere tellerförmige, schneidmesserartige Schneidscheiben 2.1 auf, welche in den Boden der Nutzfläche N gedrückt werden. Hierdurch werden rinnenartige, sich hinter den Säscharen 2 erstreckende Säfurchen erzeugt. Die Tiefe der Säfurchen bestimmt die Ablagetiefe des Saatguts G im Boden der Nutzfläche N. Neben der Schneidscheibe 2.1 kann das Säschar 2 weitere Werkzeuge, wie etwa Saatgutfixierer zum Fixieren des Saatguts G, Vorrichtungen zum Schließen der Säfurchen nach der Aussaat oder Laufräder zum gleichmäßigeren Lauf auf der Nutzfläche N, insbesondere bei höheren Fahrgeschwindigkeiten V, aufweisen, vgl. Fig. 1.

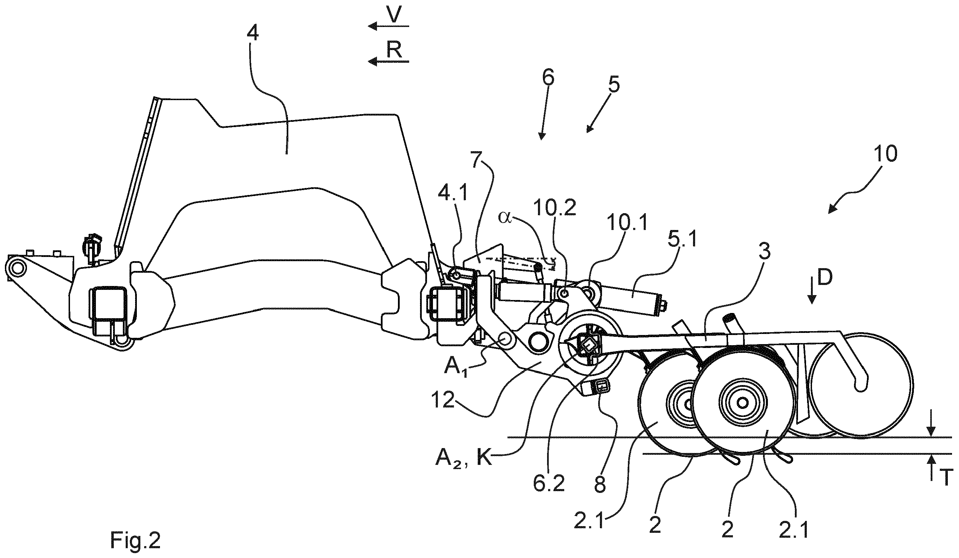

Gemäß der Darstellung in Fig. 1 ist jeweils ein Säschar 2 an einem Scharträger 3 des Scharrahmens 10 befestigt. Der Scharträger 3 dient dabei als Tragarm für das Säschar 2 und ist nach Art eines einseitig gelagerten Arms an einem Scharrahmenelement 12 gelagert, vgl. Fig. 2. Wie dies nachfolgend in Bezug auf die Schardruckeinstellung 6 erläutert werden wird, sind die Scharträger 3 an einem Schardruckrohr 6.2 gelagert, welches sich im Wesentlichen quer zur Fahrtrichtung R der Maschine 1 erstreckt. Zur Ermöglichung des Versatzes in Fahrtrichtung R zwischen benachbarten Säscharen 2 weisen die Scharträger 3 unterschiedliche Längen auf. Es ist auch denkbar, dass zwei oder mehr Säschare 2 an jeweils einem Scharträger 3 befestigt sind, wenn sich dies im jeweiligen Anwendungsfall als vorteilhaft erweisen sollte. Das Scharrahmenelement 12 ist zur Lagerung der Scharträger 3 ausgebildet und mit einem Rahmenträger 4 der Maschine 1 verbunden.

Zur Einstellung unterschiedlicher Arbeitstiefen T der Säschare 2 weist die Maschine 1 eine Schartiefeneinstellung 5 auf. Eine solche Schartiefeneinstellung 5, über welche die Ablagetiefe des Saatguts G eingestellt werden kann, kann sich insbesondere bei wechselnden Saatgutsorten, die beispielsweise unterschiedliche Anforderungen an die Ablagetiefe bei der Aussaat aufweisen können, oder auch bei unterschiedlichen Beschaffenheiten der Nutzfläche N, etwa hinsichtlich der Feuchtigkeit oder Art des Bodens, als vorteilhaft erweisen und das Einsatzspektrum der Maschine 1 erhöhen.

Nachfolgend werden die Funktion und der grundsätzliche Aufbau der Schartiefeneinstellung 5 vorwiegend anhand der Darstellungen in den Fig. 2 bis 4 erläutert. Der Scharrahmen 10 ist zur Einstellung unterschiedlicher Arbeitstiefen T um eine Tiefenachse A₁ verschwenkbar an dem Rahmenträger 4 gelagert, wobei sich die Tiefenachse A₁ im Wesentlichen quer zur Fahrtrichtung R der landwirtschaftlichen Maschine 1 erstreckt. Die Schwenkbarkeit des Scharrahmens 10 um die Tiefenachse A₁ wird durch entsprechende, im Bereich der Tiefenachse A₁ angeordnete Drehgelenke erreicht, vgl. Fig. 2.

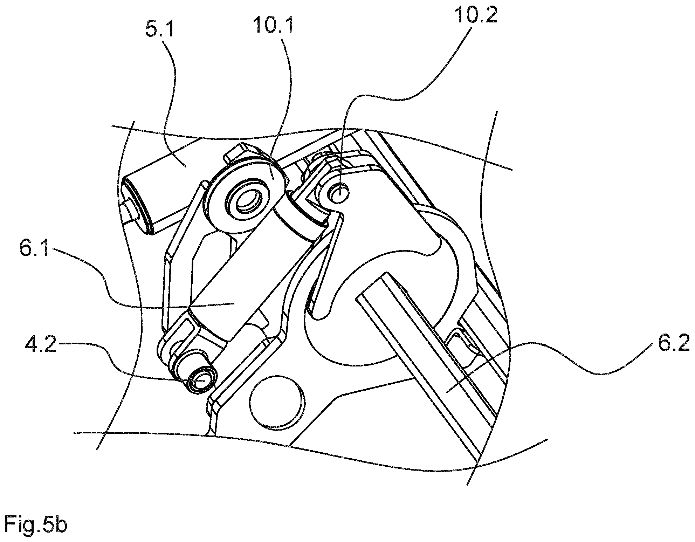

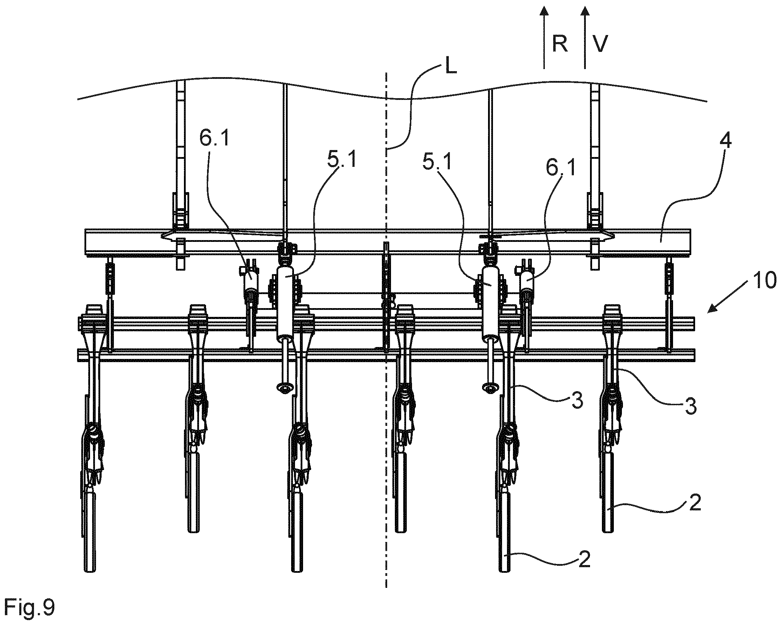

Zur Einstellung unterschiedlicher Arbeitstiefen T weist die Schartiefeneinstellung 5 zwei Stellelemente 5.1 auf. Die Stellelemente 5.1 sind längenveränderlich, im vorliegenden Ausführungsbeispiel als Hydraulikzylinder, ausgebildet und erstrecken sich jeweils zwischen einer scharrahmenseitigen Lagerstelle 10.1 und einer rahmenträgerseitigen Lagerstelle 4.1. Die scharrahmenseitige Lagerstelle 10.1 ist dabei gabelförmig ausgebildet und umschließt das Stellelement 5.1 zumindest teilweise, vgl. Fig. 5b, in welcher einer der Zinken der gabelförmigen Lagerstelle 10.1 dargestellt ist. Die Stellelemente 5.1 sind als Gleichlaufzylinder ausgebildet, welche sowohl eine Übertragung von Zug- als auch Druckkräften ermöglichen. Die als Gleichlaufzylinder ausgebildeten Stellelemente 5.1 weisen eine durchgehende Kolbenstange auf und sind im Bereich deren Zylinderrohre an den gabelförmigen Lagerstellen 10.1 befestigt. Die beiden Stellelemente 5.1 sind für eine gleichmäßige Kraftverteilung und -übertragung auf den Scharrahmen 10 mechanisch parallel zueinander, spiegelsymmetrisch zu einer Längsachse L des Scharrahmens 10 angeordnet, vgl. Fig. 9.

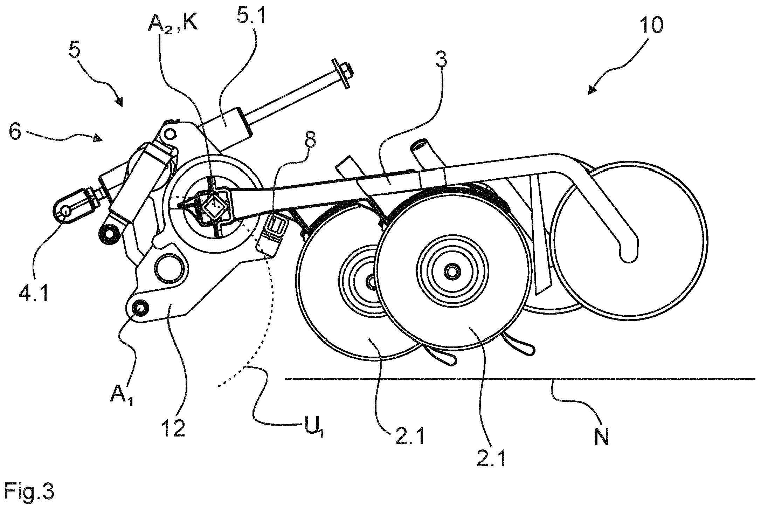

Nachfolgend wird anhand der Darstellungen in den Fig. 2 und 3 die Einstellung unterschiedlicher Arbeitstiefen T der Säschare 2 über die Schartiefeneinstellung 5 erläutert. In Fig. 3 ist eine Transportstellung S_{T} dargestellt, in welcher der Scharrahmen 10 angehoben ist und die Säschare 2 keinen Kontakt zum Boden bzw. zur Nutzfläche N haben. Eine derartige Transportstellung S_{T} kann etwa zur Umkehr der Fahrtrichtung R im Vorgewende oder für die Straßenfahrt eingestellt werden. Wie dies der Darstellung in Fig. 3 zu entnehmen ist, befindet sich das Stellelement 5.1 in der Transportstellung S_{T} in einer eingefahrenen Stellung. Aufgrund der konstruktiven Gestaltung des mit dem Stellelement 5.1 verbundenen Scharrahmenelements 12, welches um die Tiefenachse A₁ schwenkbar gestaltet ist, befindet sich die Lagerstelle für die Scharträger 3, welche an dem Scharrahmenelement 12 angeordnet ist, in einer angehobenen Stellung. Hierdurch befinden sich auch die Säschare 2, welche an den Scharträgern 3 befestigt sind, in einer angehobenen Position ohne Kontakt mit der Nutzfläche N.

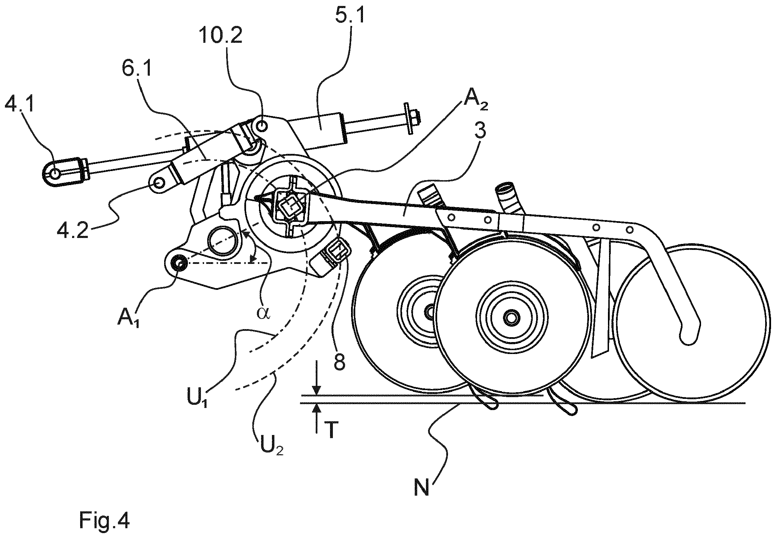

Zum Absenken des Scharrahmens 10, beispielsweise zur Einstellung einer Arbeitsstellung S_{A} aus der Transportstellung S_{T} heraus, wird das Stellelement 5.1 über die Schartiefeneinstellung 5 in eine ausgefahrene Stellung bewegt. Hierdurch wird nicht nur das Stellelement 5.1 um die rahmenträgerseitige Lagerstelle 4.1 verschwenkt, sondern das Scharrahmenelement 12 verschwenkt um einen gewissen Drehwinkel α um die Tiefenachse A₁ - gemäß den Darstellungen in Fig. 3 und 4 im Uhrzeigersinn. Infolge dieser Schwenkbewegung des Scharrahmenelements 12 wird auch der Lagerpunkt der Scharträger 3 verschwenkt, im vorliegenden Fall näher in Richtung Nutzfläche N. Der Scharrahmen 10 weist hierfür die Knickachse K auf, welche quer zur Fahrrichtung R verläuft und um welche die Scharträger 3 gegenüber dem Scharrahmenelement 12 knickbar sind. Die an den Scharträgern 3 befestigten Säschare 2 gelangen schließlich in Eingriff mit der Nutzfläche N, wodurch eine Arbeitsstellung S_{A} gegeben ist.

Über die Schartiefeneinstellung 5 kann somit der vertikale Abstand der Säschare 2 relativ zur Nutzfläche N variiert werden.

Um die eingestellte Arbeitstiefe T der Säschare 2 erfassen zu können, ist bei der landwirtschaftlichen Maschine 1 eine Arbeitstiefenerfassung 7 vorgesehen, deren Funktion und Anordnung an der landwirtschaftlichen Maschine 1 im Folgenden anhand der Darstellungen in Fig. 1 und 2 erläutert wird.

Die Arbeitstiefenerfassung 7 weist einen Drehwinkelsensor zur Messung eines zwischen dem Lagerpunkt der Scharträger 3 und der Nutzfläche N eingestellten Drehwinkels α auf. Wie dies in Fig. 1 erkennbar ist, ist die Arbeitstiefenerfassung zwischen dem Rahmenträger 4 und dem Scharrahmenelement 12 angeordnet. Der im vorliegenden Fall als Drehpotentiometer ausgebildete Drehwinkelsensor der Arbeitstiefenerfassung ist an dem Rahmenträger angeordnet. Das freie Ende eines Messhebels 7.1 des Drehpotentiometers ist mit dem Scharrahmenelement 12 über einen Lenker starr verbunden, wobei der Drehwinkel α des Messhebels 12 im Drehwinkelsensor gemessen wird. Aufgrund der Anordnung der Arbeitstiefenerfassung 7 korrespondieren die Drehwinkel α der Arbeitstiefenerfassung 7 und der Schartiefeneinstellung 5.

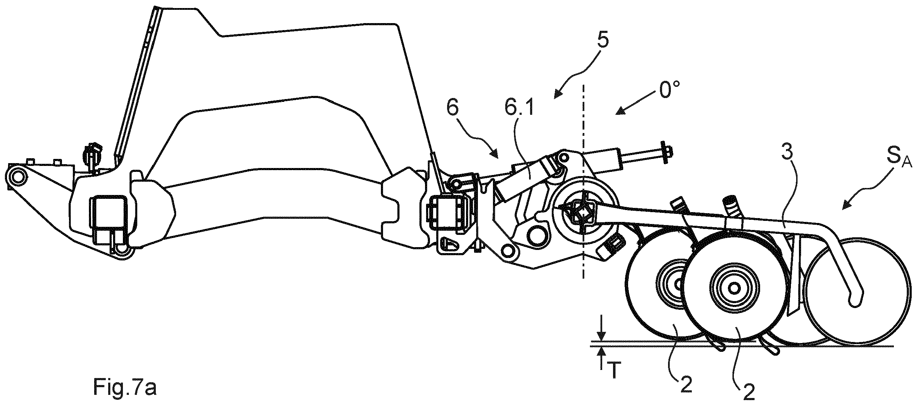

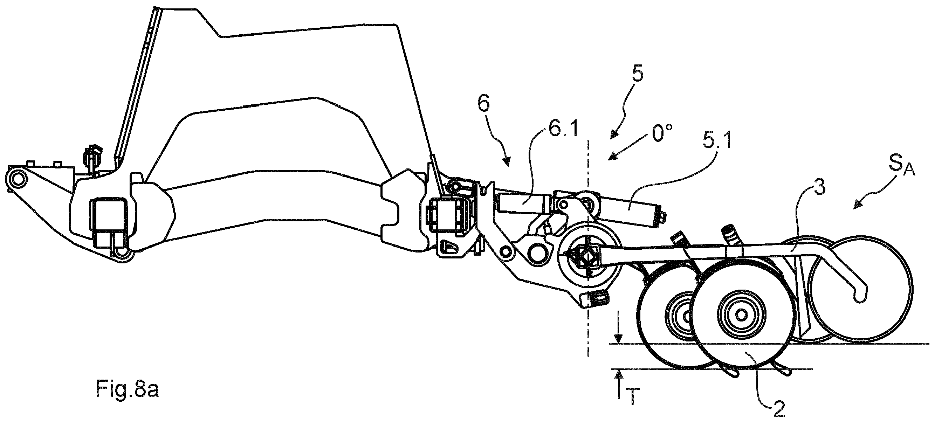

Die Kinematik der Schartiefeneinstellung 5 ist ferner derart ausgestaltet, dass eine abschnittsweise Linearität zwischen dem eingestellten Drehwinkel α und der Arbeitstiefe T besteht. Im Sinne einer Kleinwinkelnäherung kann zumindest in einem Hauptarbeitsbereich H annähernd davon ausgegangen werden, dass eine prozentuale Änderung des Drehwinkels α einer Arbeitstiefenänderung um den gleichen Prozentsatz entspricht. Eine gezielte Änderung der Arbeitstiefe T ist somit über eine proportionale Änderung des Drehwinkels α über die Schartiefeneinstellung erreichbar. Der Hauptarbeitsbereich H erstreckt sich im vorliegenden Ausführungsbeispiel etwa zwischen einer Arbeitstiefe T = -20 mm der Säschare 2, also einer Position, in welcher die Schneidscheibe 2.1 etwa 20 mm oberhalb der Nutzfläche N angeordnet ist (vgl. Fig. 7a), und +100 mm, also einer Eindringtiefe der Schneidscheibe 2.1 von ca. 100 mm in die Nutzfläche N, vgl. die Darstellung in Fig. 8a.

Neben der Schartiefeneinstellung 5 weist die landwirtschaftliche Maschine 1 auch eine Schardruckeinstellung 6 zur Einstellung unterschiedlicher auf die Säschare 2 wirkender Schardrücke D auf. Über die Einstellung der Schardrucks D kann die Laufruhe der Säschare 2 verbessert werden, beispielsweise zur Erhöhung der Fahrgeschwindigkeit V. Ferner kann über einen geeigneten Schardruck D die Einhaltung der über die Schartiefeneinstellung 5 eingestellten Arbeitstiefe T gewährleistet werden.

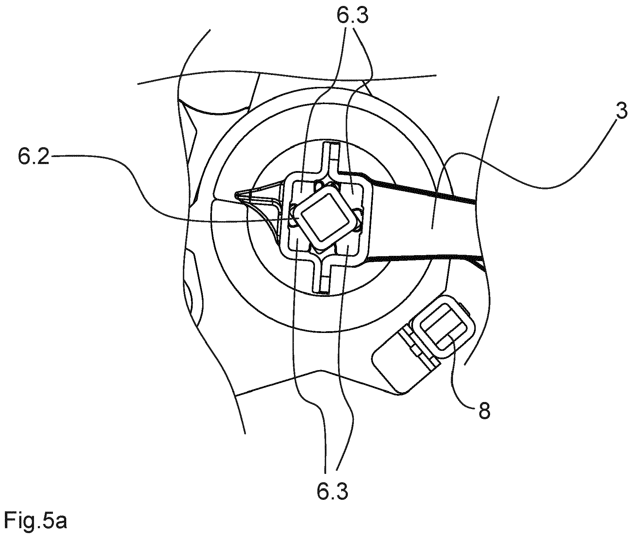

Im Folgenden werden die Funktion und der Aufbau der Schardruckeinstellung 6 anhand der Darstellungen in den Fig. 2 sowie 5a und 5b erläutert. Die die Säschare 2 lagernden Scharträger 3 sind, wie bereits zuvor dargelegt, an einem Scharrahmenelement 12 des Scharrahmens 10 gelagert. Wie dies in Fig. 2 erkennbar ist, ist an dem Scharrahmenelement 12 ein sich im Wesentlichen quer zur Fahrtrichtung R erstreckendes Schardruckrohr 6.2 drehbar gelagert. An dem Schardruckrohr 6.2, welches vorliegend nach Art eines Vierkantprofils ausgeführt und nach Art einer parallelogrammähnlichen Aufhängung über das Scharrahmenelement 12 mit dem Rahmenträger 4 verbunden ist, sind die Scharträger 3 mittels Schellen befestigt, vgl. Fig. 5a. Parallel zu dem Schardruckrohr 6.2 verlaufen nach Art von länglichen Gummisträngen ausgeführte Federelemente 6.3, welche in Umfangsrichtung des Schardruckrohrs 6.2 als Drehfederelemente wirken, so dass durch eine Rotation des Schardruckrohres 6.2 um dessen Längsachse eine Vorspannung auf die Scharträger 3 aufgebracht werden kann und diese um die Längsachse des Schardruckrohres 6.2 verschwenkt werden. Über die Vorspannung der Scharträger 3 kann ein gewisser Schardruck D auf die Säschare 2 aufgebracht werden, wobei dieser über den Rotationswinkel des Schardruckrohres 6.2 einstellbar ist.

Die Rotation des Schardruckrohres 6.2 um dessen Längsachse, welche sowohl der Druckachse A₂ und im Wesentlichen auch der Knickachse K entspricht, erfolgt mittels der Stellelemente 6.1, vgl. Fig. 5b. Die im vorliegenden Fall zwei, ebenfalls spiegelsymmetrisch zur Längsachse L angeordneten Stellelemente 6.1 der Schardruckeinstellung 6 (vgl. Fig. 9) erstrecken sich jeweils zwischen einer scharrahmenseitigen Lagerstelle 10.2 und einer rahmenträgerseitigen Lagerstelle 4.2 und sind als herkömmliche Hydraulikzylinder ausgeführt. Gemäß der Darstellungen in Fig. 2 und Fig. 5b wird bei einer Verlängerung der Stellelemente 6.1 das Schardruckrohr 6.2 im Uhrzeigersinn gedreht, so dass die daran gelagerten Scharträger 3 in Richtung Nutzfläche N verschwenken, wodurch sich ein höherer auf zwischen den Säscharen 2 und der Nutzfläche N wirkender Schardruck D ausbildet.

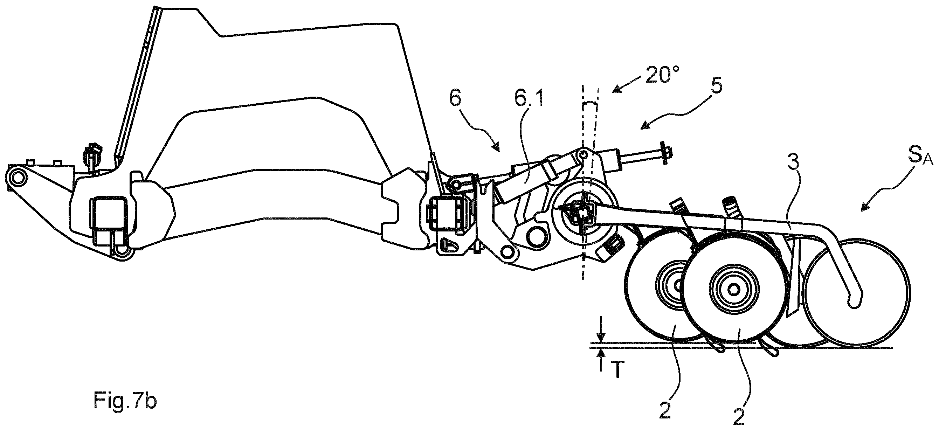

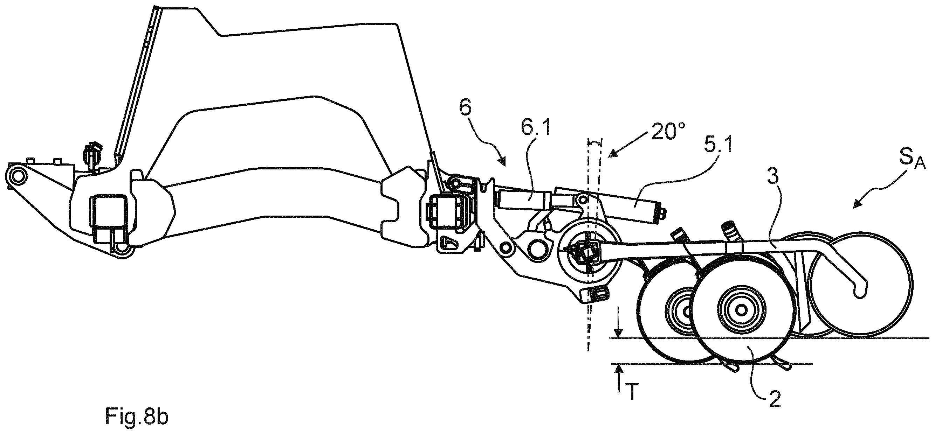

Wie dies den Darstellungen in den Fig. 7a und 7b bzw. 8a und 8b entnommen werden kann, kann der Schardruck D im Wesentlichen bei jeder beliebigen Arbeitstiefe T beliebig eingestellt werden. Die Fig. 7a und 8a zeigen dabei jeweils eine Ausgangsstellung, in welcher das Schardruckrohr 6.2 nicht gedreht ist, so dass allenfalls ein geringer Schardruck D auf die Säschare 2 wirkt. Demgegenüber zeigen die Darstellungen in Fig. 7b und 8b jeweils eine Stellung mit einem um 20° gegenüber der Ausgangsstellung um die Druckachse A₂ gedrehten Schardruckrohr 6.2, wodurch ein höherer Schardruck D aufgebracht wird. Es ist auch zu erkennen, dass sich die Lage der Druckachse A₂, insbesondere relativ zu der Tiefenachse A₁, bei einer Änderung des Schardrucks D über die Schardruckeinstellung 6 nicht ändert. Die Tiefenachse A₁ und die Druckachse A₂ verlaufen im Wesentlichen parallel zueinander, quer zur Fahrtrichtung R der Maschine 1, vgl. Fig. 1.

Wie dies bereits den vorstehenden Erläuterungen zu entnehmen ist, sind die Tiefenachse A₁ zur Einstellung der Arbeitstiefe T über die Schartiefeneinstellung 5 und die Druckachse A₂ zur Einstellung des Schardrucks D über die Schardruckeinstellung 6 separat voneinander ansteuerbar. Insbesondere ist der eingestellte Schadruck D bei einer Änderung der Arbeitstiefe T der Säschare 2 im Wesentlichen konstant.

Diese vorteilhafte, separate Ansteuerbarkeit der Tiefenachse A₁ und der Druckachse A₂ wird durch die konstruktive Gestaltung des Scharrahmens 10, insbesondere im Hinblick auf die Kinematik, ermöglicht. Wie dies beispielsweise den Darstellungen in den Fig. 3 und 4 zu entnehmen ist, ist die Druckachse A₂ über die Schartiefeneinstellung 5 auf einer Umlaufbahn U₁ um die Tiefenachse A₁ verschwenkbar. Hieraus ergibt sich die vorteilhafte unabhängige Einstellbarkeit der Schartiefe T und des Schardrucks D über die Schartiefeneinstellung 5 und die Schardruckeinstellung 6. Ferner erlaubt diese Anordnung, dass der Schardruck D bei einer Änderung der Arbeitstiefe T weitgehend nicht nachgeregelt werden muss.

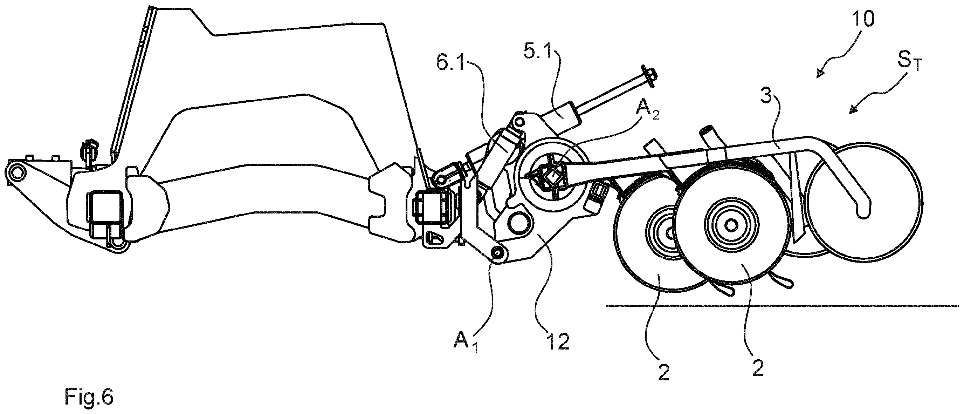

Die unabhängige Einstellmöglichkeit der Arbeitstiefe T und des Schardrucks D soll nachfolgend anhand der Darstellungen in den Fig. 6 bis 8b erläutert werden, welche eine Sequenz von unterschiedlichen Transport- bzw. Arbeitsstellungen S_{T}, S_{A} sowie unterschiedlichen Schardrücken D zeigen.

Gemäß der Darstellung in Fig. 6 befindet sich der Scharrahmen 10 in einer Transportstellung S_{T}, welche sich durch angehobene Säschare 2 auszeichnet. Die Druckachse A₂ befindet sich hierbei in vertikaler Richtung oberhalb der Tiefenachse A₁. Die Stellelemente 5.1 der Schartiefeneinstellung 5 befinden sich in der eingefahrenen Stellung, die Stellelemente 6.1 der Schardruckeinstellung 6 sind ebenfalls eingefahren, wobei in dieser Stellung ein an dem Scharrahmenelement 12 angeordneter Transportanschlag 8 in Kontakt mit den Scharträgern 3 ist. Hierfür wird das Schardruckrohr 6.2 über die Schardruckeinstellung 6 um einen gewissen Winkelbetrag, vorliegend ca. 6°, gemäß der Darstellung in Fig. 6 entgegen dem Uhrzeigersinn gedreht, so dass die Scharträger 3 über den Transportanschlag 8 vorgespannt werden, was eine sichere und verschleißarme Lagerung in der Transportstellung S_{T} erlaubt. Die genaue Ausgestaltung und Anordnung des Transportanschlags 8, welcher als Rohrsegment ausgebildet ist, kann beispielsweise auch den Darstellungen in Fig. 4 und 5b entnommen werden. Der Transportanschlag 8 ist etwa über die Schartiefeneinstellung 5 auf einer Umlaufbahn U₂ um die Tiefenachse A₁ verschwenkbar.

Gemäß der Darstellung in Fig. 7a befindet sich der Scharrahmen 10 in einer ersten Arbeitsstellung S_{A}, in welcher eine Arbeitstiefe T = -20 mm eingestellt ist. In dieser ersten Arbeitsstellung S_{A} kann der Schardruck D beliebig über die Schardruckeinstellung 6 eingestellt werden, vgl. Fig. 7b, welche eine Verdrehung des Schardruckrohres 6.2 um 20° zeigt. In ähnlicher Weise kann auch in einer durch eine größere Arbeitstiefe von T = +100 mm gekennzeichneten zweiten Arbeitsstellung S_{A} der Schardruck D unabhängig von der Schartiefeneinstellung 5 verstellt werden, vgl. Fig. 8a und b. Bei dieser Arbeitstiefe T befindet sich die Druckachse A₂ im Wesentlichen auf gleicher vertikaler Höhe wie die Tiefenachse A₁.

Neben den Arbeitsstellungen S_{A} und der Transportstellung S_{T} können weitere Stellungen vorgesehen sein, welche über die Schartiefeneinstellung 5 einstellbar sind. Hierbei kann es sich etwa um eine Klappstellung handeln, in welcher ein kollisionsfreies Klappen der Scharrahmen 10 für platzsparende Abmessungen der Maschine 1 möglich ist.

Sowohl der Schardruck D als auch die Arbeitstiefe T können von dem Bedienpersonal im Wesentlichen stufenlos und mittels einer Fernsteuerung eingestellt werden, wobei die Einstellung über ein Bedienterminal der landwirtschaftlichen Zugmaschine erfolgen kann. Ferner ist auch eine automatische Schardruckeinstellung 6 und/oder Arbeitstiefeneinstellung 5 denkbar, beispielsweise, indem diese in die Maschinensteuerung integriert sind.

Ferner können bei der vorliegenden Maschine 1 sowohl die Arbeitstiefe T als auch der Schardruck D geregelt werden, was sich insbesondere bei der Fahrt in hügeligem, kupiertem Gelände als vorteilhaft erweist. Die entsprechende Schartiefenregelung 9 zur Regelung der Arbeitstiefe T der Säschare 2, unabhängig von dem Schardruck D, berücksichtigt dabei insbesondere die Messdaten des Drehwinkelsensors der Arbeitstiefenerfassung 7 und umfasst einen Abgleich zwischen Ist- und Sollwerten der Arbeitstiefe T.

Die Schardruckregelung 11 zur arbeitstiefenunabhängigen Regelung des Schardrucks D weist ebenfalls einen Abgleich zwischen Ist- und Sollwerten des Schardrucks D auf. Die Regelung erfolgt druckbasiert, so dass auf ein Weg-Messsystem vorteilhafterweise verzichtet werden kann.

Nachdem vorstehend die Kinematik der Schartiefeneinstellung 5 und Schardruckeinstellung 6 bei der landwirtschaftlichen Maschine 1 erläutert wurde, soll nachstehend dargelegt werden, wie das hydraulische System, insbesondere in Bezug auf die als Hydraulikzylinder ausgebildete Stellelemente 5.1 der Schartiefeneinstellung 5 aufgebaut ist.

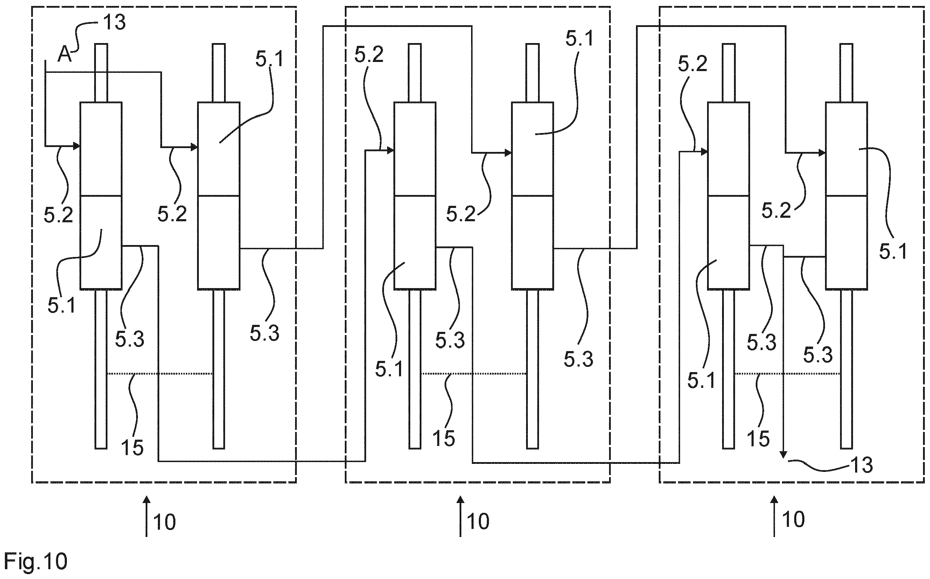

Da die Besonderheiten der hydraulischen Verschaltung, insbesondere bei einer landwirtschaftlichen Maschine 1 mit mehreren Scharrahmen 10 zu Tage treten, basieren die folgenden Ausführungen auf einer landwirtschaftlichen Maschine 1 mit drei nebeneinander, benachbart zueinander angeordneten Scharrahmen 10, wobei jeder Scharrahmen 10 für sich so aufgebaut ist, wie vorstehend erläutert. Insbesondere weist jeder Scharrahmen 10 eine separate Schartiefeneinstellung 5 mit jeweils zwei als Gleichlaufzylinder ausgebildeten Stellelementen 5.1 auf, vgl. Fig. 10. Anstelle von drei getrennten Scharrahmen 10 kann auch ein segmentierter Scharrahmen 10 vorgesehen sein, wobei jedes Segment ausgebildet ist, wie der vorstehend beschriebene Scharrahmen 10.

Ein Vorteil bei der Verwendung mehrerer Scharrahmen 10 ist, dass diese einerseits eine große Arbeitsbreite für eine effiziente Aussaat ermöglichen und andererseits für die Straßenfahrt platzsparend zusammengeklappt oder gegeneinander verschwenkt werden können. Insbesondere können die beiden äußeren Scharrahmen 10 in Richtung der Längsachse L klapp- oder schwenkbar sein.

Die beiden gemeinsam an einem Scharrahmen 10 angeordneten Stellelemente 5.1 der Tiefeneinstellung sind hydraulisch zueinander parallel geschaltet. Beide Stellelemente 5.1 sind über einen Hydraulikeinlass 5.2 mit einer zentralen Hydraulikversorgung 13 verbunden, über welche die Stellelemente 5.1 mit Hydraulikflüssigkeit versorgbar sind. Ferner sind die an benachbarten Scharrahmen 10 angeordneten Stellelemente 5.1 über eine scharrahmenübergreifende hydraulische Reihenschaltung miteinander verbunden, vgl. Fig. 10.

Die Stellelemente 5.1 benachbarter Scharrahmen 10 sind in einer Geber-Nehmeranordnung miteinander verbunden. Wie dies ebenfalls der Fig. 10 zu entnehmen ist, sind die Hydraulikauslässe 5.3 der Stellelemente 5.1 eines Scharrahmens 10 mit den Hydraulikeinlässen 5.2 der Stellelemente 5.1 eines benachbarten Scharrahmens 10 verbunden. Die Stellelemente 5.1 weisen an ihren Zylinderrohren jeweils beidseitig Anschlusszapfen auf, über welche das hydraulische Geber-Nehmersystem umgesetzt ist.

Im vorliegenden Fall sind jeweils die linken Stellelemente 5.1 eines Scharrahmens 10 und die rechten Stellelemente 5.1 eines Scharrahmens 10 hydraulisch miteinander verbunden. Die Stellelemente 5.1 des dritten Scharrahmens 10 sind jeweils mit einem Rücklauf der zentralen Hydraulikversorgung 13 verbunden.

Die als Gleichlaufzylinder ausgebildeten Stellelemente 5.1 können eine Spülfunktion aufweisen, um eventuelle Abweichungen der Arbeitstiefe T zwischen den jeweiligen Stellelementen 5.1 der Schartiefenregelung 9 ausgleichen zu können. Ferner können anstelle von Gleichlaufzylindern auch Standardzylinder verwendet und in einer hydraulischen Reihenschaltung angeordnet werden. Hierbei ist es jedoch zur Funktion der Geber-Nehmerschaltung erforderlich, dass die Zylinder des benachbarten Scharrahmens 10 kleiner ausgeführt sind als die des vorgeschalteten Scharrahmens 10. Die Ringseite der Zylinder des vorgeschalteten Scharrahmens 10 muss dabei im Wesentlichen der Bodenseite der Zylinder des nachgeschalteten Scharrahmens 10 entsprechen.

Neben der hydraulischen Verbindung sind die beiden Stellelemente 5.1 eines Scharrahmes zur Erhöhung der mechanischen Stabilität bei der Änderung der Arbeitstiefe über die Schartiefeneinstellung 5 auch mechanisch miteinander gekoppelt, wozu sich quer zur Fahrtrichtung erstreckende Querträger 15 zwischen den Kolbenstangen der Stellelemente 5.1 vorgesehen sind.

Für eine exakte und im Wesentlichen stufenlose und kontinuierliche Einstellung sowie Regelung der Arbeitstiefe T ist ein Proportionalventil vorgesehen. Alternativ können jedoch auch herkömmliche schwarz/weiß-4/3-Wegeventile oder jeweils zwei 2/2-Wegeventile verwendet werden.

Die vorstehend beschriebene landwirtschaftliche Maschine 1 zeichnet sich dadurch aus, dass die Tiefenachse A₁ über die Schartiefeneinstellung 5 und die Druckachse A₂ über die Schadruckeinstellung 6 separat ansteuerbar sind, wodurch gegenseitige Beeinträchtigungen auf ein Minimum reduziert werden können und eine aufwendige Nachregelung des Schardrucks D bei einer Veränderung der Arbeitstiefe T im Wesentlichen entfallen kann.

### Bezugszeichen liste

- 1: Maschine
- 2: Säschar
- 2.1: Schneidscheibe
- 3: Scharträger
- 4: Rahmenträger
- 4.1: Lagerstelle
- 4.2: Lagerstelle
- 5: Schartiefeneinstellung
- 5.1: Stellelement
- 5.2: Hydraulikeinlass
- 5.3: Hydraulikauslass
- 6: Schardruckeinstellung
- 6.1: Stellelement
- 6.2: Schardruckrohr
- 6.3: Federelement
- 7: Arbeitstiefenerfassung
- 7.1: Messhebel
- 8: Transportanschlag
- 9: Schartiefenregelung
- 10: Scharrahmen
- 10.1: Lagerstelle
- 10.2: Lagerstelle
- 11: Schardruckregelung
- 12: Scharrahmenelement
- 13: Hydraulikversorgung
- 14: Proportionalventil
- 15: Querträger

- A₁: Tiefenachse
- A₂: Druckachse
- D: Schardruck
- G: Saatgut
- H: Hauptarbeitsbereich
- K: Knickachse
- L: Längsachse
- N: Nutzfläche
- R: Fahrtrichtung
- S_{A}: Arbeitsstellung
- S_{T}: Transportstellung
- T: Arbeitstiefe
- U₁: Umlaufbahn
- U₂: Umlaufbahn
- V: Fahrgeschwindigkeit

- α: Drehwinkel

## Patentansprüche

1. Landwirtschaftliche Maschine, insbesondere Sämaschine, mit einem mehrere an jeweils einem Scharträger (3) angeordnete Säschare (2) aufweisenden Scharrahmen (10), der über eine Schartiefeneinstellung (5) zur Einstellung unterschiedlicher Arbeitstiefen (T) der Säschare (2) um eine Tiefenachse (A₁) gegenüber einem Rahmenträger (4) verschwenkbar ist, wobei die Scharträger (3) über eine Schardruckeinstellung (6) zur Einstellung unterschiedlicher auf die Säschare (2) wirkender Schardrücke (D) um eine Druckachse (A₂) verschwenkbar sind,
**dadurch gekennzeichnet,**
**dass** die Druckachse (A₂) über die Schartiefeneinstellung (5) auf einer Umlaufbahn (U₁) um die Tiefenachse (A₁) verschwenkbar ist.

2. Landwirtschaftliche Maschine nach Anspruch 1, **dadurch gekennzeichnet, dass** sich die Tiefenachse (A₁) und die Druckachse (A₂) parallel zueinander, insbesondere quer zu einer Fahrtrichtung (R) der landwirtschaftlichen Maschine (1) erstrecken.

3. Landwirtschaftliche Maschine nach einem der Ansprüche 1 oder 2, **dadurch gekennzeichnet, dass** der Scharrahmen (10) über die Schartiefeneinstellung (5) zwischen einer Transportstellung (S_{T}), in welcher die Säschare (2) angehoben sind, und mehreren, sich durch unterschiedliche Arbeitstiefen (T) auszeichnende Arbeitsstellungen (S_{A}) verschwenkbar ist.

4. Landwirtschaftliche Maschine nach einem der vorhergehenden Ansprüche, **dadurch gekennzeichnet, dass** die Schartiefeneinstellung (5) mindestens ein Stellelement (5.1) aufweist, über welches der Scharrahmen (10) zur Einstellung der Arbeitstiefe (T) um die Tiefenachse (A₁) verschwenkbar ist.

5. Landwirtschaftliche Maschine nach Anspruch 4, **dadurch gekennzeichnet, dass** sich das Stellelement (5.1) zwischen einer scharrahmenseitigen Lagerstelle (10.1) und einer rahmenträgerseitigen Lagerstelle (4.1) erstreckt.

6. Landwirtschaftliche Maschine nach einem der Ansprüche 4 oder 5, **dadurch gekennzeichnet, dass** das Stellelement (5.1) als Hydraulikzylinder, insbesondere als Gleichlaufzylinder, ausgebildet ist.

7. Landwirtschaftliche Maschine nach einem der vorhergehenden Ansprüche, **dadurch gekennzeichnet, dass** die Schardruckeinstellung (6) mindestens ein Stellelement (6.1) aufweist, über welches die Scharträger (3) zur Einstellung des Schardrucks (D) um die Druckachse (A₂) verschwenkbar sind.

8. Landwirtschaftliche Maschine nach Anspruch 7, **dadurch gekennzeichnet, dass** sich das Stellelement (6.1) zwischen einer scharrahmenseitigen Lagerstelle (10.2) und einer rahmenträgerseitigen Lagerstelle (4.2) erstreckt.

9. Landwirtschaftliche Maschine nach einem der Ansprüche 7 oder 8, **dadurch gekennzeichnet, dass** das Stellelement (6.1) als Hydraulikzylinder ausgebildet ist.

10. Landwirtschaftliche Maschine nach einem der vorhergehenden Ansprüche, **dadurch gekennzeichnet, dass** der Scharrahmen (10) eine quer zur Fahrtrichtung (R) verlaufende Knickachse (K) aufweist, um welche die Scharträger (3) gegenüber einem am Rahmenträger (4) angeordneten Scharrahmenelement (12) knickbar sind.

11. Landwirtschaftliche Maschine nach einem der vorhergehenden Ansprüche, **gekennzeichnet durch** eine Arbeitstiefenerfassung (7) zur Erfassung der Arbeitstiefe (T).

12. Landwirtschaftliche Maschine nach Anspruch 11, **dadurch gekennzeichnet, dass** die Arbeitstiefenerfassung (7) einen Drehwinkelsensor zur Messung eines zwischen dem Scharträger (3) und einer Nutzfläche (N) eingestellten Drehwinkels (α) aufweist, wobei der Drehwinkel (α) mit einer Arbeitstiefe (T) korrespondiert.

13. Landwirtschaftliche Maschine nach Anspruch 12, **dadurch gekennzeichnet, dass** in einem vorgegebenen Hauptarbeitsbereich (H) der Drehwinkel (α) und die Arbeitstiefe (T) annähernd proportional sind.

14. Landwirtschaftliche Maschine nach Anspruch 13, **dadurch gekennzeichnet, dass** in dem Hauptarbeitsbereich (H) eine Änderung der Arbeitstiefe (T) durch eine proportionale Änderung des Drehwinkels (α) über die Schartiefeneinstellung (5) erreichbar ist.

15. Landwirtschaftliche Maschine nach einem der Ansprüche 12 bis 14, **dadurch gekennzeichnet, dass** der Drehwinkelsensor zur Erfassung des Drehwinkels (α) zwischen dem Rahmenträger (4) und dem Scharrahmenelement (12) angeordnet ist.

16. Landwirtschaftliche Maschine nach einem der vorhergehenden Ansprüche, **gekennzeichnet durch** einen die Scharträger (3) zur Stabilisierung in der Transportstellung (S_{T}) lagernden Transportanschlag (8).

17. Landwirtschaftliche Maschine nach einem der vorhergehenden Ansprüche, **gekennzeichnet durch** eine Schartiefenregelung (9) zur schardruckunabhängigen Regelung der Arbeitstiefe (T).
